# FASCICULE DE BREVET EUROPEEN

(11) **EP 3 996 209 B1**
(45) Date de publication et mention de la délivrance du brevet: **21.06.2023**
(21) Numéro de dépôt: 21205179.1
(22) Date de dépôt: 28.10.2021
(51) Int. Cl.: H01R 4/68, H01R 43/02

(54) **DISPOSITIF DE CONNEXION ÉLECTRIQUE POUR FILS SUPRACONDUCTEURS**
ELEKTRISCHE VERBINDUNGSVORRICHTUNG FÜR SUPRALEITUNGSDRÄHTE
ELECTRICAL CONNECTION DEVICE FOR SUPERCONDUCTING WIRES

(30) Priorité: 10.11.2020 FR 2011504
(43) Date de publication de la demande: 11.05.2022
(73) Titulaire: Nexans, 92400 Courbevoie (FR)
(72) Inventeur: LALLOUET, Nicolas, 62360 BAINCTHUN (FR); DELPLACE, Sébastien, 59279 LOON-PLAGE (FR); LEGRAND, Loïc, 62370 AUDRUICQ (FR)
(74) Mandataire: Ipsilon

(56) Documents cités:
- EP-A1- 0 371 410
- EP-A1- 2 375 504
- JP-A- H10 247 533

## Description

### Domaine technique

La présente invention concerne le domaine général des circuits câblés supraconducteurs, et plus précisément un dispositif de connexion électrique apte à relier deux fils supraconducteurs.

### Arrière-plan technologique

Un câble supraconducteur permet de transporter des courants électriques de forte intensité avec une section de câble beaucoup plus faible que celle d'un câble classique composé d'un conducteur électrique résistif, tout en limitant les pertes électriques le long du câble, notamment les pertes par effet Joule puisque ce phénomène est extrêmement faible en supraconductivité.

Un câble supraconducteur est classiquement constitué d'au moins un fil supraconducteur central entouré par une enveloppe cryogénique. L'enveloppe cryogénique comporte par exemple deux enveloppes concentriques isolées thermiquement entre elles par du vide. Un fluide de refroidissement, tel que de l'hélium ou de l'azote, sous forme liquide ou gazeuse, contenu à l'intérieur de l'enveloppe cryogénique, refroidit le fil supraconducteur central jusqu'à atteindre une température inférieure à la température dite critique pour laquelle ce fil passe dans un état de supraconductivité.

Il existe un grand nombre de situations dans lesquelles il est nécessaire de connecter électriquement deux fils supraconducteurs d'un ou de plusieurs câbles supraconducteurs :

Il est connu par exemple d'utiliser des circuits câblés composés d'une pluralité de câbles supraconducteurs reliés les uns aux autres en série, de manière à réaliser un transport de courant de forte intensité sur une longue distance. Des connecteurs doivent donc être utilisés au niveau de chaque jonction entre deux câbles successifs.

D'autres circuits câblés supraconducteurs sont connus pour former des boucles supraconductrices fermées générant de forts champs magnétiques. Une telle boucle supraconductrice peut par exemple être utilisée, comme décrit notamment dans le document EP 2 732 075 B1, comme circuit électrique secondaire dans une aluminerie, pour compenser le champ magnétique créé par un circuit électrique principal transportant un courant d'électrolyse alimentant une série de cuves d'électrolyse destinées à la production d'aluminium et formant une ou plusieurs files. Pour réaliser ce type de boucle supraconductrice, il est connu d'utiliser un câble supraconducteur comprenant, dans une unique enveloppe cryogénique, un fil supraconducteur enroulé sur plusieurs tours, le fil étant composé soit d'un fil supraconducteur unique, soit d'une succession de fils élémentaires supraconducteurs connectés en série, chaque fil élémentaire formant un tour de l'enroulement. Dans ce type de boucle supraconductrice, une première extrémité du fil supraconducteur (ou du fil élémentaire constituant le premier tour) et une deuxième extrémité du fil supraconducteur (ou du fil élémentaire constituant le dernier tour) doivent être reliées électriquement aux deux pôles électriques d'une station d'alimentation électrique délivrant un courant d'alimentation d'intensité prédéterminé. Le nombre de tours effectué par le fil supraconducteur (ou le nombre de fils élémentaires supraconducteurs connectés en série) dépend de la valeur du courant d'alimentation et de la valeur du champ magnétique que l'on souhaite générer. A titre d'exemple non limitatif, une boucle supraconductrice comportant un fil supraconducteur enroulé sur 21 tours passant côte à côte à l'intérieur de l'enveloppe cryogénique unique (ou 21 fils élémentaires supraconducteurs connectés en série) et alimentée par un courant de 5 kA, permet de générer un champ magnétique correspondant à 105 kA. Les versions de boucle supraconductrice dans lesquelles le fil supraconducteur enroulé sur plusieurs tours est composé d'une succession de fils élémentaires supraconducteurs formant chacun un tour de l'enroulement sont préférées à celles utilisant un fil supraconducteur unique. En effet, ces versions, bien que nécessitant plusieurs connecteurs pour relier en série les fils élémentaires supraconducteurs successifs, permettent d'éviter, lors de la fabrication de la boucle supraconductrice, des manipulations complexes et des flexions excessives des fils élémentaires supraconducteurs qui pourraient conduire à une perte d'efficacité des propriétés électriques de ces fils.

La Demanderesse a déjà développé des techniques de connexion de supraconducteurs utilisant le brasage par un alliage d'étain. Ces techniques connues nécessitent l'emploi d'un équipement de chauffage externe dont l'encombrement est beaucoup trop important pour être utilisé pour un circuit dans lequel plusieurs connexions doivent être réalisées dans un même voisinage.

Dans d'autres types connus de connexion, deux câbles sont connectés l'un à l'autre de façon aboutée : les extrémités des deux câbles sont placées l'une en regard de l'autre et recouvertes par un matériau de brasage. Une connexion aboutée ne convient néanmoins pas dans le cas où les fils supraconducteurs doivent véhiculer des courants importants car elle génère des pertes résistives trop importantes.

Le document EP2375504 A divulgue un dispositif de connexion électrique selon le préambule de la revendication 1.

### Résumé de l'invention

La présente invention a pour but de proposer un dispositif de connexion entre deux fils supraconducteurs qui permette de limiter les pertes résistives. Un autre but de l'invention est de simplifier le processus de connexion entre deux fils supraconducteurs. Un autre but de l'invention est de proposer un dispositif de connexion qui soit le plus compact possible.

La présente invention a pour objet un dispositif de connexion électrique comportant :
- une pièce de liaison définissant un canal interne débouchant sur l'extérieur de la pièce de liaison, ledit canal interne étant apte à recevoir deux portions d'extrémité de deux fils supraconducteurs; et
- une ouverture sur l'enveloppe externe de la pièce de liaison, ladite ouverture étant en communication avec ledit canal interne pour permettre l'insertion d'un matériau de brasage sous forme liquide dans ledit canal interne autour des deux portions d'extrémité des deux fils supraconducteurs,

caractérisé en ce que la pièce de liaison comprend un corps allongé central (10), le canal interne (12) s'étendant en ligne droite entre une première extrémité ouverte (11a) et une deuxième extrémité ouverte (11b) de la pièce de liaison, situées de part et d'autre du corps allongé central (10),
en ce que ledit canal interne (12) est configuré pour que les deux portions d'extrémité de deux fils supraconducteurs (2, 3) s'étendent parallèlement et en contact l'une avec l'autre dans le canal interne (12) sur ladite portion de longueur commune, et en ce que le canal interne (12) présente une section transversale en forme de huit.

La pièce de liaison est de préférence monobloc et en matériau conducteur électrique supportant une température cryogénique. La pièce de liaison est par exemple en cuivre.

Dans des modes de réalisation possibles, ladite ouverture est une fente s'étendant sur le corps allongé central, parallèlement au canal interne.

Dans des modes de réalisation possibles, la dimension de la section transversale en forme de huit est de préférence sensiblement ajustée aux dimensions des sections transversales des deux portions d'extrémité des deux fils supraconducteurs.

Dans ces modes de réalisation, la première extrémité ouverte et la deuxième extrémité ouverte peuvent avoir une section transversale oblongue concentrique avec la section transversale en forme de huit du canal interne.

Le dispositif de connexion électrique comporte en outre de préférence deux manchons thermo rétractables configurés pour entourer de façon étanche les zones de transition de deux fils supraconducteurs insérés dans la première extrémité ouverte et la deuxième extrémité ouverte.

Dans des modes de réalisation possibles, le corps allongé central est cylindrique.

La première extrémité ouverte et la deuxième extrémité ouverte peuvent être avantageusement situées de part et d'autre du corps allongé central de façon à ce que le canal interne soit excentré par rapport à un axe longitudinal du corps allongé central.

Dans ce cas, le corps allongé central peut comporter un canal additionnel s'étendant parallèlement au canal interne et débouchant sur l'extérieur au niveau au moins d'une des deux extrémités du corps allongé central.

Le canal additionnel peut être configuré pour recevoir une cartouche chauffante.

Le canal additionnel débouche de préférence sur l'extérieur au niveau des deux extrémités du corps allongé central.

Le canal interne est de préférence positionné entre ladite ouverture et ledit canal additionnel.

La présente invention a également pour objet un circuit électrique câblé supraconducteur apte à former une boucle électrique supraconductrice fermée comportant un câble supraconducteur comprenant une pluralité de fils élémentaires supraconducteurs s'étendant longitudinalement à l'intérieur d'une enveloppe cryogénique, les fils élémentaires supraconducteurs étant reliés en série par une pluralité de dispositifs de connexion électrique selon l'invention de manière à former chacun un tour de la boucle électrique supraconductrice.

### Brève description des figures

La description qui va suivre en regard des dessins annexés, donnés à titre d'exemples non limitatifs, fera bien comprendre en quoi consiste l'invention et comment elle peut être réalisée. Sur les figures annexées:
La figure 1 illustre schématiquement différentes vues montrant une opération de connexion de deux fils supraconducteurs au moyen d'un dispositif de connexion électrique selon un mode de réalisation possible de l'invention ;
La figure 2 illustre un agencement dans lequel plusieurs paires de fils supraconducteurs sont connectées au moyen de plusieurs dispositifs de connexion électrique conformes à l'invention;
La figure 3 illustre une vue transversale d'une extrémité d'un exemple de câble comportant trois sous-câbles pour la réalisation d'une boucle supraconductrice ;
La figure 4 illustre le principe de transformation d'une extrémité du câble de la figure 3 en un agencement permettant la connexion en série de fils élémentaires supraconducteurs du câble;
La figure 5 illustre une première pièce de guidage utilisée lors de la transformation selon le principe de la figure 4 ;
La figure 6 illustre schématiquement un premier agencement intermédiaire des trois sous-câbles obtenu lors de la transformation selon le principe de la figure 4 ;
[fig. 7] La figure 7 illustre une deuxième pièce de guidage et de support utilisée lors de la transformation selon le principe de la figure 4 ;
[fig. 8] La figure 8 illustre schématiquement un deuxième agencement intermédiaire de fils élémentaires composant les sous-câbles, obtenu lors de la transformation selon le principe de la figure 4 ;
[fig. 9] La figure 9 illustre une troisième pièce de guidage et de support utilisée lors de la transformation selon le principe de la figure 4 ;
[fig. 10] La figure 10 illustre schématiquement une phase spécifique opérée lors de transformation selon le principe de la figure 4 ;
[fig. 11] La figure 11 illustre schématiquement un schéma de connexion possible pour les fils élémentaires du câble de la figure 3.

### Description de mode(s) de réalisation

Dans les figures, les éléments identiques ou équivalents porteront les mêmes signes de référence. Les différents schémas ne sont pas à l'échelle.

Dans toute la description, on entend par fil supraconducteur (ou par fil élémentaire supraconducteur) tout élément longitudinal supraconducteur ou comportant un coeur longitudinal métallique (par exemple en cuivre) entouré d'au moins une couche supraconductrice (formée par exemple de plusieurs fils ou rubans supraconducteurs entourant le coeur de cuivre).

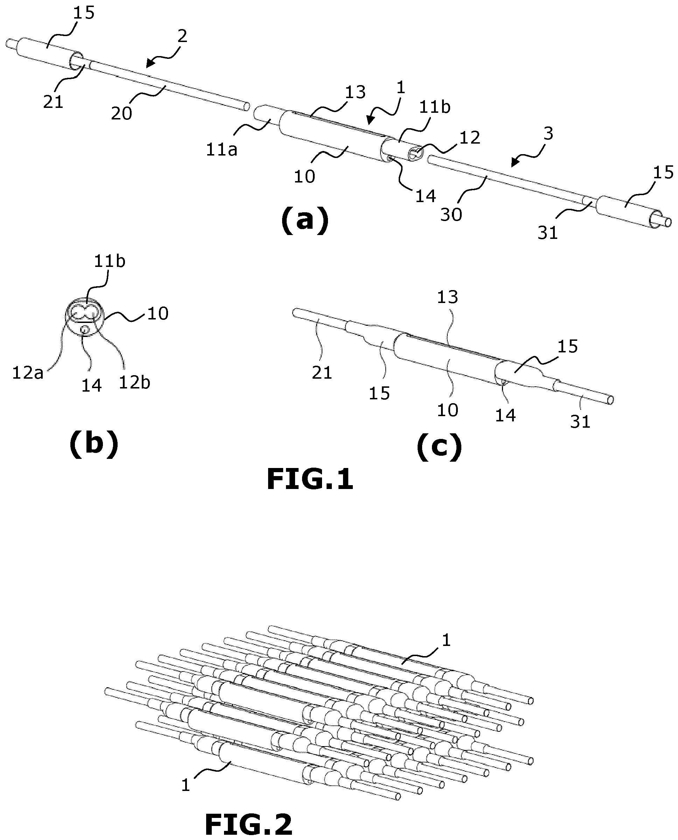

La figure 1 illustre schématiquement un mode de réalisation possible d'un dispositif 1 de connexion électrique conforme à l'invention, destiné à relier deux fils supraconducteurs 2, 3. Plus précisément, la vue (a) illustre le dispositif 1 de connexion lors d'une opération de connexion de deux portions d'extrémité des deux fils supraconducteurs 2, 3, la vue (b) illustre une vue de face d'une extrémité du dispositif de connexion 1, et la vue (c) illustre le résultat obtenu après connexion des deux fils supraconducteurs 2, 3 au moyen du dispositif 1 de connexion électrique.

Dans l'exemple non limitatif représenté, chaque fil supraconducteur 2, respectivement 3, comporte un élément longitudinal supraconducteur 20, respectivement 30 (ou, comme indiqué ci-avant un coeur longitudinal métallique entouré d'une couche supraconductrice), entouré optionnellement d'une couche électriquement isolante 21, respectivement 31. Il conviendra de noter que, dans le cas de la présence des couches isolantes 21, 31, les portions d'extrémité des fils 2, 3 devront être préalablement dénudées pour exposer les éléments longitudinaux supraconducteurs 20, 30 qui vont être reliés entre eux par l'intermédiaire du dispositif 1 de connexion électrique.

Comme plus particulièrement visible sur la vue (a) de la figure 1, le dispositif 1 de connexion électrique comporte une pièce de liaison définissant un canal interne 12 débouchant sur l'extérieur de la pièce de liaison. La pièce de liaison est en matériau conducteur électrique supportant une température cryogénique afin que le dispositif 1 de connexion puisse être placé, avec les deux fils supraconducteurs qu'il relie, dans toute enveloppe ou boîtier cryogénique à l'intérieur desquels un fluide cryogénique est susceptible de circuler. La pièce de liaison est de préférence en cuivre, si possible de haute pureté (par exemple du Cu-c2), afin de réduire au maximum sa résistance électrique aux températures cryogéniques.

Le canal interne 12 est configuré pour recevoir les deux portions d'extrémité des deux fils supraconducteurs 2, 3, préalablement dénudées le cas échéant, de manière à ce que ces portions d'extrémité puissent s'étendre parallèlement, et de préférence en contact l'une avec l'autre, dans le canal interne 12 sur une portion de longueur commune.

Dans le mode de réalisation non limitatif illustré sur la figure 1, la pièce de liaison comprend un corps allongé central 10, par exemple de forme cylindrique, ainsi qu'une première extrémité ouverte 11a et une deuxième extrémité ouverte 11b situées de part et d'autre du corps allongé central 10. Le canal interne 12 s'étend avantageusement en ligne droite entre la première extrémité ouverte 11a et la deuxième extrémité ouverte 11b de la pièce de liaison. Ceci permet d'insérer par glissement rectiligne les portions d'extrémité des fils supraconducteurs 2, 3 à l'intérieur du canal interne sans aucun pliage de fils qui risquerait de détériorer ces fils. Le portions d'extrémité se retrouvent ici en contact sur une portion de longueur commune correspondant au maximum à la longueur du canal interne 12.

Le dispositif 1 de connexion électrique comporte également une ouverture 13 sur l'enveloppe externe de la pièce de liaison. Cette ouverture 13 est en communication avec le canal interne 12, et permet ainsi l'insertion d'un matériau de brasage sous forme liquide dans le canal interne 12 autour des deux portions d'extrémité des deux fils supraconducteurs 2, 3 introduites dans le canal. Dans l'exemple non limitatif représenté, l'ouverture 13 est une fente qui s'étend sur le corps allongé central 10, parallèlement au canal interne 12, ce qui favorise un remplissage rapide du canal interne par le matériau de brasage sous forme liquide.

Comme plus particulièrement visible sur la vue (b) de la figure 1, le canal interne 12 présente de préférence une section transversale en forme de huit, obtenue par exemple par la réunion de deux trous traversants 12a, 12b communiquant l'un avec l'autre sur toute leur longueur. La pièce de liaison, c'est-à-dire ici le corps central 10 pourvu des deux extrémités ouvertes 11a, 11b, est de préférence sous forme monobloc, ce qui permet d'obtenir le canal interne 12 en perçant la pièce d'une extrémité à l'autre en passant par le corps central 10 pour réaliser les deux trous traversants 12a, 12b.

La dimension de la section transversale en forme de huit du canal interne 12 est en outre de préférence sensiblement ajustée aux dimensions des sections transversales des deux portions d'extrémité des deux fils supraconducteurs 2, 3. ceci permet non seulement de garantir que les portions de fils soient bien en contact l'une de l'autre dans le canal interne 12 avant l'opération de brasage, mais aussi de réduire la quantité de matériau de brasage sous forme liquide nécessaire pour remplir le canal interne 12. Ceci étant d'autant plus important que le matériau de brasage utilisé, de préférence de l'étain ou un alliage d'étain, possède une résistivité plus élevée que le cuivre aux températures cryogéniques.

Dans l'exemple non limitatif illustré sur la figure 1, la première extrémité ouverte 11a et la deuxième extrémité ouverte 11b ont une section transversale oblongue concentrique avec la section transversale en forme de huit du canal interne 12 (voir notamment les vues (a) et (b)). Le dispositif 1 de connexion électrique comporte en outre deux manchons 15 thermo rétractables configurés pour entourer de façon étanche les zones de transition de deux fils supraconducteurs insérés dans la première extrémité ouverte 11a et la deuxième extrémité ouverte 11b. Grâce à la section oblongue de chaque extrémité ouverte 11a et 11b, chaque manchon 15 thermo rétractable vient recouvrir la zone de transition en épousant parfaitement la forme des extrémités ouvertes 11a et 11b, et des fils supraconducteurs 2 et 3, comme tout particulièrement visible sur la vue (c) de la figure 1. Le canal interne 12 peut être ainsi fermé de manière étanche au niveau de ses deux extrémités (correspondant aux extrémités ouvertes 11a et 11b) une fois que les extrémités des fils supraconducteurs ont été insérées dans le canal jusqu'à leur position de brasage, garantissant un remplissage sans perte du canal interne 12 par le matériau de brasage sous forme liquide. Dans le cas non limitatif où les fils supraconducteurs 2 et 3 comportent une gaine isolante 21, respectivement 31, les manchons thermo rétractables 15 sont avantageusement dimensionnés pour s'étendre jusqu'aux parties non dénudées des fils supraconducteurs. En variante, les extrémités des fils supraconducteurs sont dénudées seulement sur une longueur correspondant à la longueur d'insertion à l'intérieur du canal interne 12.

Dans le mode de réalisation non limitatif illustré sur la figure 1, on peut noter que la première extrémité ouverte 11a et la deuxième extrémité ouverte 11b sont situées de part et d'autre du corps allongé central 10 de façon à ce que le canal interne 12 soit excentré par rapport à un axe longitudinal du corps allongé central 10. En d'autres termes, l'axe selon lequel le canal central 12 s'étend n'est pas confondu mais parallèle à l'axe longitudinal du corps allongé central 10. Cette disposition spécifique permet de prévoir, à l'intérieur du corps allongé central 10, un canal additionnel 14 s'étendant parallèlement au canal interne 12 et débouchant sur l'extérieur au niveau au moins d'une des deux extrémités du corps allongé central 10. Ce canal additionnel 14, obtenu par exemple en perçant le corps allongé central 10, peut être avantageusement dimensionné pour accueillir une cartouche chauffante (non représentée) utilisée au moment de l'opération de brasage des extrémités des deux fils supraconducteur insérées dans le canal interne 12 pour porter le matériau de brasage sous forme liquide à une température supérieure à sa température de fusion. Dans le mode de réalisation illustré, le canal additionnel 14 débouche sur l'extérieur au niveau des deux extrémités du corps allongé central 10. Ceci permet de faciliter l'extraction de la cartouche chauffante après utilisation. Un tel canal additionnel 14 complètement traversant permet en outre à tout fluide de refroidissement dans la circulation duquel le dispositif 1 de connexion peut être soumis, de traverser le canal additionnel 14, et de contribuer ainsi à l'efficacité du refroidissement du dispositif 1 et des portions de fils supraconducteurs contenues dans le canal central 12.

Le canal interne 10 est positionné de préférence entre l'ouverture 13 et le canal additionnel 14 (voir vue (a) de la figure 1).

Le dispositif 1 de connexion tel qu'illustré sur la figure 1 peut être utilisé de deux façons pour connecter deux extrémités de fils supraconducteurs :

Un premier procédé de connexion électrique des deux fils supraconducteurs 2, 3 au moyen du dispositif 1 de connexion électrique selon le mode de réalisation illustré sur la figure 1 comporte essentiellement les étapes suivantes :
a. on positionne le dispositif 1 de connexion de façon à ce que le corps allongé central 10 s'étende sensiblement horizontalement, avec l'ouverture 13 de remplissage orientée vers le haut (voir vue (a) de la figure 1).
b. les manchons rétractables 15 sont pré positionnés autour de chaque extrémités des deux fils supraconducteurs 2, 3 à connecter ;
c. lorsque les fils supraconducteurs comportent une gaine isolante, telle que les gaines 21 et 31, les portions d'extrémité de ces fils sont dénudées de façon à exposer la partie supraconductrice 20, 30 des fils, sur une longueur correspondant de préférence à la longueur d'insertion à l'intérieur du canal interne 12 ;
d. la portion d'extrémité 20 du premier fil supraconducteur 2 est insérée longitudinalement dans l'un des trous 12a, 12b formant le canal interne 12 via la première extrémité ouverte 11a ; de même, la portion d'extrémité 30 du deuxième fil supraconducteur 3 est insérée longitudinalement dans l'autre des trous 12a, 12b formant le canal interne 12 via la deuxième extrémité ouverte 11b. A l'issue de cette étape, ces deux portions s'étendent parallèlement et en contact l'une avec l'autre dans le canal interne 12 sur une portion de longueur commune (correspondant au maximum à la longueur longitudinal du canal interne 12);
e. chaque manchon 15 thermo rétractable est alors repositionné au niveau des extrémités ouvertes 11a, 11b de manière à garantir un zone de transition étanche (voir vue (c) de la figure 1);
f. on place une cartouche chauffante à l'intérieur du canal additionnel 14 ;
g. on remplit le canal interne 12, via l'ouverture 13, par un matériau de brasage sous forme liquide ;
h. on active la cartouche chauffante ; et
i. on retire de préférence la cartouche chauffante après l'opération de brasage.

Dans le premier procédé décrit ci-avant, certaines étapes peuvent être interverties ou menées en parallèle. C'est le cas notamment des étapes b et c, ou encore de l'étape f.

Dans un deuxième procédé de connexion, les deux portions d'extrémité 20, 30 sont insérées dans le canal central 12 via la même extrémité ouverte, par exemple la première extrémité 11a. Dans ce cas, seules les étapes b, d et e décrites ci-avant diffèrent légèrement. En particulier, au niveau des étapes b et e, seul un manchon thermo rétractable 15 est pré positionné autour des deux portions d'extrémité 20, 30, avant l'étape d'insertion des deux fils dans le canal central 12, puis repositionné de manière à recouvrir, dans cet exemple, la première extrémité ouverte 11a et les deux fils pour garantir l'étanchéité. Un bouchon est utilisé pour fermer la deuxième extrémité ouverte 11b. Ce bouchon peut être un bouchon thermo rétractable. En variante, le bouchon peut être un bouchon usiné métallique, par exemple en cuivre, et recouvert à sa jonction d'un ruban de kapton ou d'un autre matériau thermo rétractable.

Comme indiqué précédemment, le dispositif de connexion électrique selon l'invention permet d'optimiser les pertes résistives au niveau de la connexion. Il permet également de réaliser des connexions de fils supraconducteurs beaucoup plus rapidement et à moindre coût que les connecteurs connus. De plus, le processus de connexion des fils supraconducteurs à l'aide de ce dispositif nécessite peu d'opérations qui risqueraient de nuire à l'efficacité de ces fils supraconducteurs. Le dispositif de connexion permet en outre de garantir un bon refroidissement de la connexion en améliorant la circulation d'un fluide cryogénique.

Par ailleurs, le dispositif de connexion électrique est très compact. A titre d'exemple non limitatif, pour connecter deux fils supraconducteurs cylindriques de 10 mm de diamètre, on peut prévoir les dimensions suivantes :
- longueur du canal central 12 : environ 250 mm.
- diamètre ce chaque canal 12a/12b formant le canal central 12 : environ 11 mm.
- portion de longueur commune minimum dans le connecteur : au moins 100 mm.
- longueur du corps central 10 : environ 150 mm.
- diamètre du corps central 10 : environ 30 mm.

Dans le cas où les fils supraconducteurs à connecter comportent plusieurs rubans ou fils supraconducteurs torsadés selon un pas donné, la portion de longueur commune est de préférence au moins égale à ce pas. On garantit dans ce cas que chaque fil ou ruban unitaire supraconducteur puisse transmettre au plus court dans le connecteur en étant en contact avec tous les autres fils ou rubans unitaires.

Comme l'encombrement total du dispositif 1 de connexion mais aussi l'espace nécessaire pour mettre en oeuvre la connexion de deux fils supraconducteurs via ce dispositif sont optimisés, il est possible de réaliser en parallèle un grand nombre de connexions de paires de fils supraconducteurs dans un espace total réduit au minimum. La figure 2 illustre un exemple non limitatif d'agencement de vingt-deux dispositifs 1 de connexion connectant chacun deux fils supraconducteurs. Les vingt-deux dispositifs 1 se répartissent selon trois groupes, en particulier :
- un premier groupe de sept dispositifs 1 de connexion électrique positionnés parallèlement les uns aux autres dans un plan horizontal supérieur ;
- un deuxième groupe de huit dispositifs 1 de connexion électrique positionnés parallèlement les uns aux autres dans un plan horizontal intermédiaire; et
- un troisième groupe de sept dispositifs 1 de connexion électrique positionnés parallèlement les uns aux autres dans un plan horizontal inférieur.

Dans cet agencement, les dispositifs 1 répartis dans deux plans horizontaux consécutifs sont en outre préférentiellement décalés verticalement deux à deux. Cela permet de rendre accessibles les ouvertures de chaque dispositif 1, de sorte qu'il est possible de procéder, de préférence simultanément, au remplissage du canal central de chaque dispositif par le matériau de brasage sous forme liquide. En outre, cela simplifie la connectique des cartouches chauffantes. Celles-ci peuvent par exemple être connectées à un unique dispositif de contrôle (non représenté) permettant de déclencher, séquentiellement ou simultanément, l'activation des cartouches chauffantes.

Quelle que soit la façon dont deux fils supraconducteurs sont connectés électriquement l'un à l'autre (à l'aide d'un dispositif de connexion selon l'invention ou de tout autre connecteur connu), il existe un grand intérêt de pouvoir amener un grand nombre de fils supraconducteurs à connecter deux à deux conformément à l'agencement illustré sur la figure 2, c'est-à-dire selon un ou plusieurs plans horizontaux, en particulier lorsque l'on souhaite réaliser une boucle supraconductrice fermée générant de forts champs magnétiques pour les raisons qui vont être à présent détaillées.

Pour fixer les idées, on considère dans la suite, à titre non limitatif, que l'on souhaite réaliser une boucle supraconductrice fermée comprenant un fil supraconducteur enroulé sur vingt-et-un tours passant côte à côte à l'intérieur d'une enveloppe cryogénique unique, le fil supraconducteur résultant de la connexion en série de vingt-et-un fils élémentaires supraconducteurs formant chacun un tour.

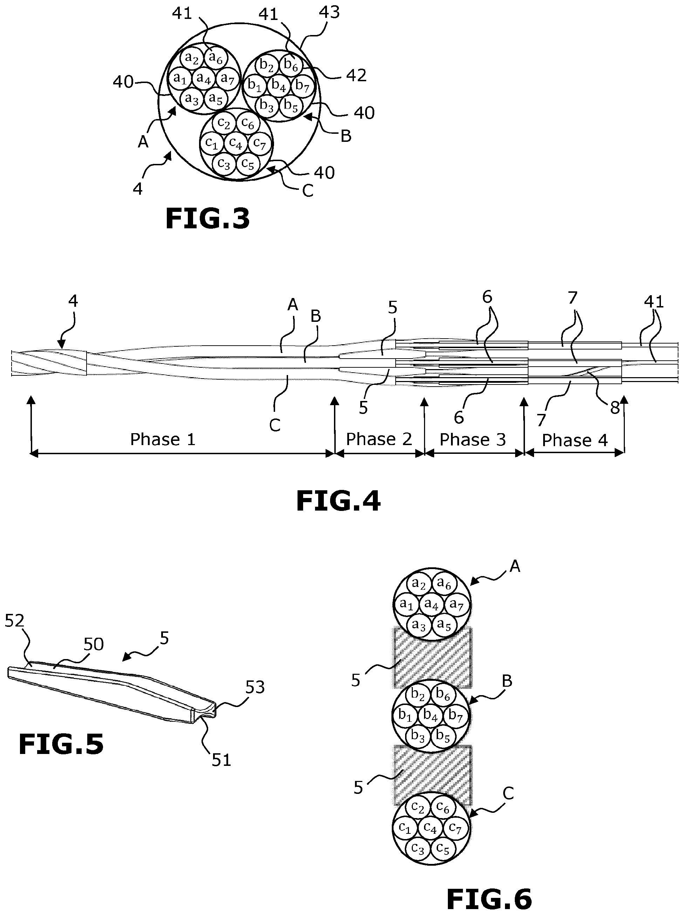

Pour ce faire, on utilise avantageusement un câble supraconducteur tel que le câble 4 illustré en section transversale sur la figure 3 (sans son enveloppe cryogénique). Le câble supraconducteur 4 comporte, dans cet exemple, trois modules ou sous-câbles A, B, C comportant chacun, au sein d'une enveloppe 40 de maintien mécanique, sept fils élémentaires supraconducteurs 41, de préférence identiques, destinés à constituer les vingt-et-un tours de la boucle supraconductrice. Chacun des fils élémentaires supraconducteurs 41 comporte un élément longitudinal supraconducteur (ou, comme indiqué ci-avant un coeur longitudinal métallique entouré d'une couche supraconductrice), entouré d'une couche électriquement isolante 42. Les trois sous-câbles A, B, C sont de préférence torsadés entre eux pour former un toron et entourés d'une enveloppe 43 de maintien mécanique global des trois sous-câbles, éventuellement électriquement isolante. Le tout est entouré d'une enveloppe cryogénique (non représentée) à l'intérieur de laquelle un fluide de refroidissement peut être mis en circulation.

Dans la suite, pour simplifier les explications du schéma de connexion :
- les extrémités visibles sur la figure 3 des sept fils élémentaires supraconducteurs 41 du sous-câble A sont notées a₁ à a₇;
- les autres extrémités (non visibles sur la figure 3) des sept fils élémentaires supraconducteurs 41 du sous-câble A sont notées a'₁ à a'₇ ;
- les extrémités visibles sur la figure 3 des sept fils élémentaires supraconducteurs 41 du sous-câble B sont notés b₁ à b₇;
- les autres extrémités (non visibles sur la figure 3) des sept fils élémentaires supraconducteurs 41 du sous-câble B sont notées b'₁ à b'₇ ;
- les extrémités visibles sur la figure 3 des sept fils élémentaires supraconducteurs 41 du sous-câble C sont notés c₁ à c₇ ;
- les autres extrémités (non visibles sur la figure 3) des sept fils élémentaires supraconducteurs 41 du sous-câble C sont notées c'₁ à c'₇ ;
- chaque fil élémentaire supraconducteur peut ainsi être représenté par un couple formé de ses deux extrémités (aᵢ - a'ᵢ), (bᵢ - b'ᵢ) ou (cᵢ - c'ᵢ), l'entier i variant de 1 à 7.

Tous les fils élémentaires supraconducteurs vont devoir être connectés successivement les uns aux autres, par exemple selon la série suivante : {t₁ - (a₁ - a'₁) - (a₂ - a'₂) - (a₃ - a'₃) - (a₃ - a'₃) - (a₄ - a'₄) - (a₅ - a'₅) - (a₆ - a'₆) - (b₁ - b'₁) - (b₂ - b'₂) - (b₃ - b'₃) - (b₄ - b'₄) - (b₅ - b'₅) - (b₆ - b'₆) - (b₇ - b'₇) - (c₁ - c'₁) - (c₂ - c'₂) - (c₃ - c'₃) - (c₄ - c'₄) - (c₅ - c'₅) - (c₆ - c'₆) - (c₇ - c'₇) - t₂ } dans laquelle t₁ et t₂ sont les extrémités de deux fils de connexion à deux bornes d'alimentation grâce auxquelles un courant électrique pourra circuler dans la boucle supraconductrice fermée.

On notera que l'on privilégie avantageusement, pour des raisons qui seront mieux comprises dans la suite, la connexion en série de tous les fils élémentaires appartenant au même sous-câble A, B ou C.

Pour pouvoir connecter chacun des fils élémentaires selon la série ci-avant il convient d'ouvrir le câble 4 à chacune de ses extrémités, puis d'ouvrir chaque sous-câble A, B, C afin de séparer chaque extrémité de chaque fil élémentaire supraconducteur 41. Cette opération de séparation doit être conduite de manière à ne pas endommager les propriétés supraconductrices des fils élémentaires supraconducteurs 41. En effet, les fils supraconducteurs sont plus fragiles qu'un fil conducteur résistif standard et doivent absolument respecter un rayon de courbure donné. Un guidage des fils élémentaires supraconducteurs 41 est donc absolument nécessaire.

Par ailleurs, le guidage des fils élémentaires supraconducteurs 41 doit être tel que les extrémités des fils élémentaires supraconducteurs 41 à connecter puissent être placées en vis-à-vis de connecteurs (tels que celui décrit en relation avec la figure 1), tous les connecteurs nécessaires devant en outre être concentrés dans un espace le plus faible possible de manière à pouvoir être contenus dans une boîte de connexion cryogénique de dimension raisonnable apte à gérer par ailleurs la circulation d'un fluide de refroidissement dans la boucle supraconductrice considérée.

Enfin, compte-tenu du fait que le courant dans le système va générer des forces magnétiques entre chaque fil élémentaire supraconducteur d'autant plus importantes que le courant est élevé, il est préférable de prévoir que ces forces soient soutenues tout au long de la chaîne allant de chaque extrémité du câble 4 aux connecteurs.

Le principe d'un système innovant de guidage des fils élémentaires supraconducteurs 41 permettant de répondre à l'ensemble des exigences précédentes va à présent être explicité en référence aux figures 4 à 11. En particulier, la figure 4 résume sous forme schématique les différentes étapes mises en oeuvre pour permettre la transformation d'une extrémité du câble 4 en une pluralité de fils élémentaires supraconducteurs 41 aptes à être connectés deux par deux (on comprendra que la même transformation est reproduite à l'autre extrémité du câble 4). Les figures 5, 7 et 9 illustrent certains éléments du système de guidage nécessaires à cette transformation, et les figures 6, 8, 10 et 11 aident à comprendre le positionnement relatif des fils élémentaires supraconducteurs 41 à différentes étapes de la transformation. Comme on l'a vu précédemment en référence à l'intérêt procuré par l'agencement de la figure 2, le principe général du système de guidage innovant consiste à faire en sorte que, pour chaque sous-câble A, B et C du câble 4, les fils élémentaires supraconducteurs composant le sous-câble soient séparés puis guidés de manière à être agencés selon un plan horizontal, les plans horizontaux obtenus pour les trois sous-câbles A, B et C se superposant.

En référence à la figure 4 (laquelle se lit de gauche à droite), une première opération (Phase 1) consiste à enlever l'enveloppe cryogénique et l'enveloppe 43 de maintien global des trois sous-câbles A, B, C du câble 4 sur une portion de longueur de l'extrémité du câble 4 de façon à rendre accessibles les portions correspondantes des sous-câbles A, B et C. Ces portions de sous-câbles A, B et C sont détorsadées et placées en contact les unes avec les autres selon un axe vertical. On respecte ainsi un rayon de courbure qui n'endommage pas les propriétés électriques des sous-câbles.

Une deuxième opération (Phase 2) consiste à séparer verticalement les portions de sous-câbles A, B, C l'une de l'autre afin de disposer d'un espace suffisant pour effectuer ultérieurement les différentes connexions. Pour ce faire, on utilise de préférence deux premières pièces de guidage spécifiques 5, dont la forme préférentielle, illustrée sur la figure 5, comporte deux rainures concaves 50, 51 et opposées, adaptées à recevoir chacune une portion de l'un des sous-câbles A, B ou B, C, chaque rainure s'étendant entre une extrémité 52 d'entrée pour le sous-câble correspondant et une extrémité 53 de sortie pour le sous-câble correspondant de la première pièce de guidage 5. Chaque première pièce de guidage 5 est de préférence constituée d'un matériau électriquement isolé supportant la température cryogénique. Par exemple, un polymère spécifique renforcé de fibres comme le G10 pourrait être utilisé. Les deux rainures concaves 50, 51 sont usinées pour suivre de préférence le diamètre du sous-câble A, B ou C dans la zone de contact, et pour s'écarter l'une de l'autre afin d'augmenter la distance séparant verticalement les deux sous-câbles qu'elles accueillent. La conception de la pièce 5 (en particulier l'angle d'écart des deux rainures) doit respecter le rayon de courbure acceptable des sous-câbles et bloquer au maximum tout mouvement de chaque sous-câble. A l'issue de la Phase 2, les portions de sous-câbles A, B et C sont positionnées relativement les unes aux autres comme illustré sur la figure 6.

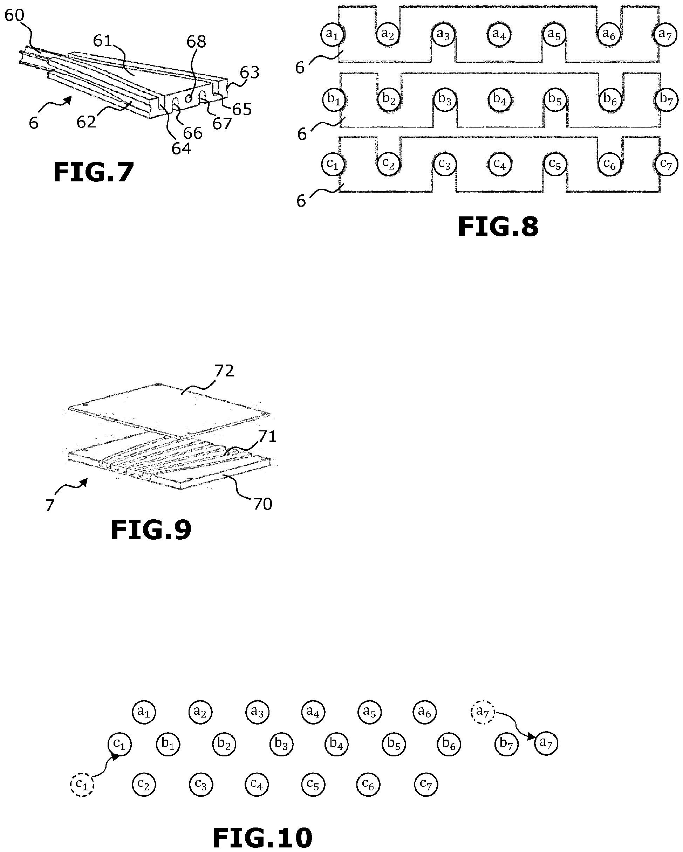

Lors d'une troisième opération (Phase 3), les fils élémentaires supraconducteurs qui sont encore toronnés à l'intérieur de chaque portion de sous-câble A, B, C sont ensuite détordus (après avoir ôté une portion de longueur de l'enveloppe de maintien 40) et placés dans un plan horizontal grâce à une deuxième pièce de guidage et de support dédiée 6 (une pièce par sous-câble). Ici encore, la conception de cette deuxième pièce de guidage et de support 6 doit respecter le rayon de courbure acceptable des fils élémentaires supraconducteurs le long de ce processus et en même temps soutenir mécaniquement ces fils pour réduire au maximum leur mouvement potentiel pendant le fonctionnement ultérieur de la boucle supraconductrice en raison du champ magnétique élevé. Une forme préférée de cette deuxième pièce de guidage et de support dédiée 6 est illustrée sur la figure 7. Elle comporte une extrémité d'entrée 60 supportée dans la continuité de la deuxième extrémité 53 afin de recevoir le sous-câble A, B ou C en sortie des premières pièces de guidage 5. Un corps tronconique 61 s'évasant dans le prolongement horizontal de l'extrémité d'entrée 60 comporte sept rainures ou chemins spécifiques aptes à recevoir chacun des fils élémentaires supraconducteurs du sous-câble correspondant A, B ou C. Dans l'exemple non limitatif, les rainures ou chemins se composent avantageusement de deux rainures 62, 63 ouvertes latéralement sur le corps tronconique 61, de deux rainures 64, 65 ouvertes sur une partie supérieure du corps tronconique 61, de deux rainures 66, 67 ouvertes sur une partie inférieure du corps tronconique 61, et d'un canal central 68. Le fond des rainures 62 à 65 et le centre du canal central 68 se retrouvent alignés dans la partie distale du corps tronconique 61, opposée à l'extrémité d'entrée 60. Les sept fils élémentaires supraconducteurs d'un sous-câble A, B ou C s'écartent progressivement les uns des autres et se retrouvent dans la position illustrée en figure 8, qui représente, à l'issue de la Phase 3 une vue transversale de la portion d'extrémité de sortie des deuxièmes pièces de guidage et de support 6 avec les fils élémentaires supraconducteurs correspondants. Chaque deuxième pièce de guidage et de support 6 est de préférence constituée d'un matériau électriquement isolé supportant la température cryogénique. Par exemple, un polymère spécifique renforcé de fibres comme le G10 pourrait être utilisé. Des plaques de fermeture (non représentée) recouvrant chacune des surfaces du corps tronconiques peuvent être avantageusement utilisées afin d'éviter que les fils élémentaires supraconducteurs ne sortent des rainures qui les guident et les soutiennent. Comme on le voit clairement sur la figure 8, les fils élémentaires supraconducteurs des sous-câbles A, B et C se retrouvent alignés selon trois plans horizontaux superposés, un plan horizontal supérieur pour les fils élémentaires supraconducteurs a₁ à a₇ du sous-câble A, un plan horizontal inférieur pour les fils élémentaires supraconducteurs c₁ à c₇ du sous-câble C, et un plan horizontal intermédiaire pour les fils élémentaires supraconducteurs b₁ à b₇ du sous-câble B.

Lors d'une ultime étape (Phase 4 de la figure 4), les fils élémentaires supraconducteurs de chaque sous-câble A, B et C sont encore plus séparés les uns des autres dans leur plan horizontal respectif. En effet, comme le rayon de courbure acceptable pour les fils élémentaire peut être assez grand, la distance nécessaire dans chaque deuxième élément de guidage et de support 6 pour les séparer suffisamment peut être trop longue pour la réaliser en un seul élément. Un troisième élément de guidage et de support 7 est utilisé à cet effet pour chaque sous-câble. Comme visible sur la figure 9, ce troisième élément de guidage et de support comporte essentiellement une plaque plane 70 comportant sept rainures 71 ouvertes sur la partie supérieure de la plaque plane. Du côté de la face d'entrée de la plaque plane 70 (en bas à gauche de la figure 9), les rainures sont espacées pour être en regard avec les rainures et chemins 64 à 68 de la face de sortie de deuxième pièce de guidage et de support 6. En d'autres termes, chaque troisième élément de guidage et de support 7 s'étend dans le prolongement de chaque deuxième pièce de guidage et de support 6 correspondante. Les rainures suivent alors un parcours spécifique respectant le rayon de courbure acceptable pour les fils élémentaires jusqu'à ce qu'ils soient suffisamment séparés les uns des autres, en d'autres termes pour être en regard avec les connecteurs qui seront utilisés pour connecter les fils élémentaires en série. Pour éviter tout mouvement des fils élémentaires supraconducteurs hors de ces rainures 71 en raison notamment du champ magnétique élevé en fonctionnement de la boucle supraconductrice, une plaque de fermeture 72 est de préférence fixée sur la partie supérieure de la plaque 70. Ici encore, chaque troisième pièce de guidage et de support 7 est de préférence constituée d'un matériau électriquement isolé supportant la température cryogénique, par exemple en G10.

Pour réaliser un véritable circuit en boucle, certains des fils élémentaires supraconducteurs doivent pouvoir changer de plan horizontal. C'est le cas notamment du fil élémentaire c₁ qui doit passer du plan horizontal inférieur au plan horizontal intermédiaire, et du fil élémentaire a₇, qui doit passer du plan horizontal supérieur au plan horizontal intermédiaire, comme illustré schématiquement sur la figure 10. Des guides comportant une rainure spécifique tels que le guide 8 sur la figure 4 sont prévus à cet effet. Ce guide 8 permet au fil élémentaire c1 de quitter la rainure de la partie supérieure de la troisième pièce de guidage qui lui est associée (celle au niveau du plan horizontal inférieur) pour arriver par le bas dans la plaque de guidage 70 de la troisième pièce de guidage associée au sous-câble B (celle au niveau du plan horizontal intermédiaire). De manière analogue, un autre de ces guides (non représenté) permet au fil élémentaire a7 de quitter la rainure de la troisième pièce de guidage qui lui est associée (celle au niveau du plan horizontal supérieur) pour rejoindre une rainure de la troisième pièce de guidage associée au sous-câble B (celle au niveau du plan horizontal intermédiaire). Les guides tels que le guide 8 sont de préférence également en G10.

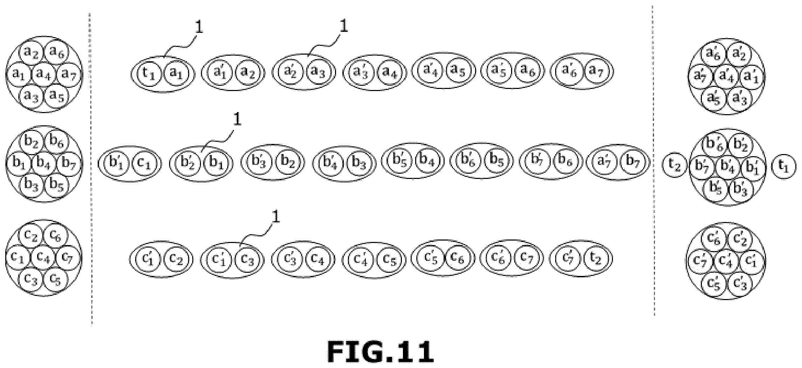

Comme indiqué précédemment, la figure 4 résume les différentes étapes mises en oeuvre pour permettre la transformation d'une extrémité du câble 4 en une pluralité de fils élémentaires supraconducteurs aptes à être connectés deux par deux. Ces mêmes étapes sont effectuées au niveau de l'autre extrémité du câble 4 de manière à pouvoir effectuer les connexions finales, par exemple au moyen des connecteurs 1 des figures 1 et 2, achevant la réalisation de la boucle supraconductrice entres les deux terminaisons t₁ et t₂. La figure 11 illustre schématiquement le schéma global de connexion correspondant à l'exemple du câble 4 des figures 3 et 4. Sur cette figure 11, la partie gauche illustre les trois sous-câbles A, B et C vus d'un côté du câble 4, à l'issue de la Phase 2 du processus de la figure 4 alors que la partie droite illustre ces mêmes sous-câbles A, B, C vus de l'autre côté du câble 4, à l'issue de cette même Phase 2. La partie centrale de la figure 11 représente la répartition des différents fils élémentaires obtenue à l'issue de la Phase 4, et leur connexion, de préférence par les connecteurs 1, dans le respect de la série précitée. Une fois la boucle réalisée, tous les connecteurs ainsi que toutes les pièces de guidage et de support décrites ci-avant peuvent être agencés dans une même boîte cryogénique de connexion assurant non seulement la circulation d'un fluide de refroidissement à l'intérieur de la boucle, mais aussi les connexions électriques des bornes de terminaison t₁ et t₂ pour la circulation d'un courant dans la boucle.

Bien que le principe de réalisation d'une boucle supraconductrice a été décrit pour un câble comportant trois sous-câbles A, B, C comportant chacun sept fils élémentaires supraconducteurs, ce principe reste valable quels que soient le nombre de sous-câbles composant le câble, et/ou le nombre de fils élémentaires supraconducteurs 41 que comporte chaque sous-câble A, B ou C. Pour un nombre N donné de sous-câbles composant un même câble, le principe innovant consiste à déployer les fils élémentaires de chaque sous-câble en N plans horizontaux, avec des transitions ponctuelles entre ces plans horizontaux.

## Revendications

1. Dispositif (1) de connexion électrique comportant :
• une pièce de liaison définissant un canal interne (12) débouchant sur l'extérieur de la pièce de liaison, ledit canal interne (12) étant apte à recevoir deux portions d'extrémité de deux fils supraconducteurs (2, 3); et
• une ouverture (13) sur l'enveloppe externe de la pièce de liaison, ladite ouverture (13) étant en communication avec ledit canal interne (12) pour permettre l'insertion d'un matériau de brasage sous forme liquide dans ledit canal interne (12) autour des deux portions d'extrémité des deux fils supraconducteurs (2, 3) ;
**caractérisé en ce que** la pièce de liaison comprend un corps allongé central (10), le canal interne (12) s'étendant en ligne droite entre une première extrémité ouverte (11a) et une deuxième extrémité ouverte (11b) de la pièce de liaison, situées de part et d'autre du corps allongé central (10),
**en ce que** ledit canal interne (12) est configuré pour que les deux portions d'extrémité de deux fils supraconducteurs (2, 3) s'étendent parallèlement et en contact l'une avec l'autre dans le canal interne (12) sur ladite portion de longueur commune, et **en ce que** le canal interne (12) présente une section transversale en forme de huit.

2. Dispositif (1) de connexion électrique selon la revendication 1, dans lequel la pièce de liaison est monobloc et en matériau conducteur électrique supportant une température cryogénique.

3. Dispositif (1) de connexion électrique selon la revendication 2, dans lequel la pièce de liaison est en cuivre.

4. Dispositif (1) de connexion électrique selon l'une quelconque des revendications précédentes, dans lequel ladite ouverture (13) est une fente s'étendant sur le corps allongé central (10), parallèlement au canal interne (12).

5. Dispositif (1) de connexion électrique selon l'une quelconque des revendications précédentes, dans lequel la dimension de la section transversale en forme de huit est sensiblement ajustée aux dimensions des sections transversales des deux portions d'extrémité des deux fils supraconducteurs (2, 3).

6. Dispositif (1) de connexion électrique selon l'une quelconque des revendications précédentes, dans lequel la première extrémité ouverte (11a) et la deuxième extrémité ouverte (11b) ont une section transversale oblongue concentrique avec la section transversale en forme de huit du canal interne (12).

7. Dispositif (1) de connexion électrique selon la revendication 6, comportant en outre deux manchons (15) thermo rétractables configurés pour entourer de façon étanche les zones de transition de deux fils supraconducteurs insérés dans la première extrémité ouverte (11a) et la deuxième extrémité ouverte (11b).

8. Dispositif (1) de connexion électrique selon l'une quelconque des revendications précédentes, dans lequel ledit corps allongé central (10) est cylindrique.

9. Dispositif (1) de connexion électrique selon l'une quelconque des revendications précédentes, dans lequel la première extrémité ouverte (11a) et la deuxième extrémité ouverte (11b) sont situées de part et d'autre du corps allongé central (10) de façon à ce que le canal interne (12) soit excentré par rapport à un axe longitudinal du corps allongé central (10).

10. Dispositif (1) de connexion électrique selon la revendication 9, dans lequel le corps allongé central (10) comporte un canal additionnel (14) s'étendant parallèlement au canal interne (12) et débouchant sur l'extérieur au niveau au moins d'une des deux extrémités du corps allongé central (10).

11. Dispositif (1) de connexion électrique selon la revendication 10, dans lequel le canal additionnel (14) est configuré pour recevoir une cartouche chauffante.

12. Dispositif (1) de connexion électrique selon l'une quelconque des revendications 10 ou 11, dans lequel le canal additionnel (14) débouche sur l'extérieur au niveau des deux extrémités du corps allongé central (10).

13. Dispositif (1) de connexion électrique selon l'une quelconque des revendications 10 à 12, dans lequel ledit canal interne (12) est positionné entre ladite ouverture (13) et ledit canal additionnel (14).

14. Circuit électrique câblé supraconducteur apte à former une boucle électrique supraconductrice fermée comportant un câble (4) supraconducteur comprenant une pluralité de fils élémentaires supraconducteurs (41) s'étendant longitudinalement à l'intérieur d'une enveloppe cryogénique, les fils élémentaires supraconducteurs (41) étant reliés en série par une pluralité de dispositifs (1) de connexion électrique selon l'une quelconque des revendications 1 à 13 de manière à former chacun un tour de la boucle électrique supraconductrice.

## Patentansprüche

1. Elektrische Verbindungsvorrichtung (1) umfassend:
- ein Verbindungsstück, das einen internen Kanal (12) definiert, der auf die Außenseite des Verbindungsstücks mündet, wobei der interne Kanal (12) ausgelegt ist, um zwei Endabschnitte von zwei Supraleitungsdrähten (2, 3) aufzunehmen; und
- eine Öffnung (13) auf der äußeren Hülle des Verbindungsstücks, wobei die Öffnung (13) mit dem internen Kanal (12) in Kommunikation steht, um das Einführen eines Lötmaterials in flüssiger Form in den internen Kanal (12) um die zwei Endabschnitte der zwei Supraleitungsdrähte (2, 3) zu ermöglichen;
**dadurch gekennzeichnet, dass** das Verbindungsstück einen verlängerten zentralen Körper (10) umfasst, wobei sich der interne Kanal (12) in gerader Linie zwischen einem ersten offenen Ende (11a) und einem zweiten offenen Ende (11b) des Verbindungsstücks erstreckt, die sich auf beiden Seiten des verlängerten zentralen Körpers (10) befinden,
dadurch, dass der interne Kanal (12) so konfiguriert ist, dass sich die zwei Endabschnitte von zwei Supraleitungsdrähten (2, 3) parallel und in Kontakt miteinander im internen Kanal (12) auf dem Abschnitt gemeinsamer Länge erstrecken, und dadurch, dass der interne Kanal (12) einen Querschnitt in Form einer 8 aufweist.

2. Elektrische Verbindungsvorrichtung (1) nach Anspruch 1, wobei das Verbindungsstück einstückig und aus elektrisch leitendem Material ist, das einer kryogenen Temperatur standhält.

3. Elektrische Verbindungsvorrichtung (1) nach Anspruch 2, wobei das Verbindungsstück aus Kupfer ist.

4. Elektrische Verbindungsvorrichtung (1) nach einem der vorhergehenden Ansprüche, wobei die Öffnung (13) ein Schlitz ist, der sich auf dem verlängerten zentralen Körper (10) parallel zum internen Kanal (12) erstreckt.

5. Elektrische Verbindungsvorrichtung (1) nach einem der vorhergehenden Ansprüche, wobei die Abmessung des Querschnitts in Form einer 8 im Wesentlichen an die Abmessungen der Querschnitte der zwei Endabschnitte der zwei Supraleitungsdrähte (2, 3) angepasst ist.

6. Elektrische Verbindungsvorrichtung (1) nach einem der vorhergehenden Ansprüche, wobei das erste offene Ende (11a) und das zweite offene Ende (11b) einen konzentrischen verlängerten Querschnitt mit dem Querschnitt in Form einer 8 des internen Kanals (12) aufweisen.

7. Elektrische Verbindungsvorrichtung (1) nach Anspruch 6, umfassend außerdem zwei wärmeschrumpfbare Muffen (15), die konfiguriert sind, um auf dichte Weise die Übergangsbereiche von zwei Supraleitungsdrähten zu umgeben, die in das erste offene Ende (11a) und das zweite offene Ende (11b) eingeführt sind.

8. Elektrische Verbindungsvorrichtung (1) nach einem der vorhergehenden Ansprüche, wobei der verlängerte zentrale Körper (10) zylindrisch ist.

9. Elektrische Verbindungsvorrichtung (1) nach einem der vorhergehenden Ansprüche, wobei sich das erste offene Ende (11a) und das zweite offene Ende (11b) auf beiden Seiten des verlängerten zentralen Körpers (10) befinden, so dass der interne Kanal (12) mit Bezug auf eine Längsachse des verlängerten zentralen Körpers (10) exzentrisch ist.

10. Elektrische Verbindungsvorrichtung (1) nach Anspruch 9, wobei der verlängerte zentrale Körper (10) einen zusätzlichen Kanal (14) umfasst, der sich parallel zum internen Kanal (12) erstreckt und auf die Außenseite auf der Ebene mindestens eines der zwei Enden des zentralen verlängerten Körpers (10) mündet.

11. Elektrische Verbindungsvorrichtung (1) nach Anspruch 10, wobei der zusätzliche Kanal (14) konfiguriert ist, um eine Heizpatrone aufzunehmen.

12. Elektrische Verbindungsvorrichtung (1) nach einem der Ansprüche 10 oder 11, wobei der zusätzliche Kanal (14) auf die Außenseite auf der Ebene der zwei Enden des zentralen verlängerten Körpers (10) mündet.

13. Elektrische Verbindungsvorrichtung (1) nach einem der Ansprüche 10 bis 12, wobei der interne Kanal (12) zwischen der Öffnung (13) und dem zusätzlichen Kanal (14) positioniert ist.

14. Verkabelter Supraleitungsstromkreis, der ausgelegt ist, um eine geschlossene elektrische Supraleitungsschleife zu bilden, umfassend ein Supraleitungskabel (4), umfassend eine Vielzahl von elementaren Supraleitungsdrähten (41), die sich längs gerichtet im Inneren einer kryogenen Hülle erstrecken, wobei die elementaren Supraleitungskabel (41) in Reihe durch eine Vielzahl von elektrischen Verbindungsvorrichtungen (1) nach einem der Ansprüche 1 bis 13 verbunden sind, um jeweils eine Umdrehung der elektrischen Supraleitungsschleife zu bilden.

## Claims

1. An electrically connecting device (1) comprising:
• a linking part defining an inner channel (12) that opens onto the exterior of the linking part, said inner channel (12) being able to receive two end portions of two superconducting wires (2, 3); and
• an aperture (13) in the outer jacket of the linking part, said aperture (13) being in communication with said inner channel (12) in order to allow a brazing material in liquid form to be introduced into said inner channel (12) around the two end portions of the two superconducting wires (2, 3);
**characterized in that** the linking part comprises a central elongate body (10), the inner channel (12) extending in a straight line between a first open end (11a) and a second open end (11b) of the linking part, said ends being located on either side of the central elongate body (10),
**in that** said inner channel (12) is configured so that the two end portions of two superconducting wires (2, 3) extend parallel and in contact with each other in the inner channel (12) over said segment of common length, and **in that** the inner channel (12) has, in cross-section, the shape of an eight.

2. The electrically connecting device (1) according to claim 1, wherein the linking part is monobloc and made of an electrically conductive material able to withstand a cryogenic temperature.

3. The electrically connecting device (1) according to claim 2, wherein the linking part is made of copper.

4. The electrically connecting device (1) according to any one of the preceding claims, wherein said aperture (13) is a slit extending over the central elongate body (10), parallel to the inner channel (12).

5. The electrically connecting device (1) according to any one of the preceding claims, wherein the dimension of the cross-section in the shape of an eight is substantially adjusted to the dimensions of the cross-sections of the two end portions of the two superconducting wires (2, 3).

6. The electrically connecting device (1) according to any one of the preceding claims, wherein the first open end (11a) and the second open end (11b) have an elongate cross-section that is concentric with the cross-section in the shape of an eight of the inner channel (12).

7. The electrically connecting device (1) according to claim 6, further comprising two heat-shrinkable sleeves (15) that are configured to sealably encircle the transition regions of two superconducting wires inserted into the first open end (11a) and the second open end (11b).

8. The electrically connecting device (1) according to any one of the preceding claims, wherein said central elongate body (10) is cylindrical.

9. The electrically connecting device (1) according to any one of the preceding claims, wherein the first open end (11a) and the second open end (11b) are located on either side of the central elongate body (10) so that the inner channel (12) is off-center with respect to a longitudinal axis of the central elongate body (10).

10. The electrically connecting device (10) according to claim 9, wherein the central elongate body (10) comprises an additional channel (14) extending parallel to the inner channel (12) and opening onto the outside at least at one of the two ends of the central elongate body (10).

11. The electrically connecting device (1) according to claim 10, wherein the additional channel (14) is configured to receive a heating cartridge.

12. The electrically connecting device (1) according to any one of claims 10 or 11, wherein the additional channel (14) opens onto the outside at both ends of the central elongate body (10).

13. The electrically connecting device (1) according to any one of claims 10 to 12, wherein said inner channel (12) is positioned between said aperture (13) and said additional channel (14).

14. A superconducting cable-based electrical circuit able to form a closed superconducting electrical loop comprising a superconducting cable (4) comprising a plurality of superconducting elementary wires (41) that extend longitudinally inside a cryogenic jacket, the superconducting elementary wires (41) being connected in series by a plurality of electrically connecting devices (1) according to any one of claims 1 to 13 so as to each form one turn of the superconducting electrical loop.
